Europäisches Patentamt

(19) European Patent Office

Office européen des brevets

(11) Publication number: **0 094 710**
**B1**

(12) # EUROPEAN PATENT SPECIFICATION

(45) Date of publication of the patent specification:
05.02.86

(51) Int. Cl.⁴: **G 02 B 6/42**

(21) Application number: 83200652.2

(22) Date of filing: 06.05.83

(54) **Optical coupling device.**

(30) Priority: **14.05.82 NL 8202008**

(43) Date of publication of application:
**23.11.83 Bulletin 83/47**

(45) Publication of the grant of the patent:
**05.02.86 Bulletin 86/6**

(84) Designated Contracting States:
**DE FR GB NL SE**

(56) References cited:
**EP - A - 0 013 972**
**DE - A - 2 750 322**
**FR - A - 2 484 742**
**GB - A - 2 054 896**
**US - A - 3 950 075**

(73) Proprietor: **N.V. Philips' Gloeilampenfabrieken,**
**Groenewoudseweg 1, NL-5621 BA Eindhoven (NL)**

(72) Inventor: **Meuleman, Lambertus Johan, c/o INT.**
**OCTROOIBUREAU B.V. Prof. Holstlaan 6, NL-5656 AA**
**Eindhoven (NL)**

(74) Representative: **Veenstra, Gustaaf et al,**
**INTERNATIONAAL OCTROOIBUREAU B.V. Prof.**
**Holstlaan 6, NL-5656 AA Eindhoven (NL)**

LIBER, STOCKHOLM 1986

## Description

The invention relates to an optical coupling device for coupling an end of a light-conducting fibre to an optical transmitter device and an optical receiver device, the receiver device comprising a light-receiving element arranged opposite an end face of the fibre end and provided with an opening, a front side of said element facing the fibre end, the transmitter devic e comprising a transmitter element located on the back side of the lightcollecting element remote from the fibre end opposite the opening along with a transmitter lens designed to focus light emitted by the transmitter element towards the end face of the fibre end.

Such a device is known from The Bell System Technical Journal, 58, no. 7 (September 1979), pp. 17351741. The known coupling device comprises a comparatively large number of optical components, which have to be aligned accurately with respect to each other. As a result, the operation of mounting this coupling device is timeconsuming and expensive.

The invention has for its object to provide a coupling device which has a comparatively simple construction and can be rapidly and readily manufactured as compared with the known coupling device.

The coupling device according to the invention is therefore characterized in that between the end face of the fibre end and the front side of the light-receiving element there is arranged a transparent body optically coupled to the fibre end, the light-receiving element and the transmitter element said transparent body having side faces and at least part of each side face is reflecting, the arrangement being such that substantially all the light emanating from the fibre end strikes the light-receiving element.

The transparent body may be, for example, a cylindrical glass rod, the cylindrical surface of which is coated with a reflective layer so that the light emanating from the fibre end invariably impinges on the lightreceiving element without it being necessary for the parts to be aligned accurately with respect to each other. Only the transmitter lens should be positioned so that the light emitted by the transmitter element is focussed onto the end face of the fibre end. This can be effected in a very simple manner in a preferred embodiment of the coupling device according to the invention, which is characterized in that the transmitter element is coupled to the transparent body by means of a detachable coupling comprising a first plug part with a first ball lens serving as the transmitter lens, which first plug part can be detachably secured in a plug holder rigidly connected to the transparent body.

The detachable coupling can be of a type known per se, as described, for example, in the Dutch patent Application no. 79 05 610 (PHN 9537). The alignment is then effected by means of the precedure usual for these couplings.

A further preferred embodiment of the coupling device according to the invention is characterized in that the end of the light-conducting fibre is coupled to the transparent body by means of a detachable coupling comprising a second plug part with a second ball lens, which second plug part can be detachably secured in a plug holder rigidly connected to the transparent body and accommodating a third ball lens which, when the second plug part is connected to the plug holder, constitutes together with the second ball lens an optical imaging system designed for imaging approximately to scale the end face of the fibre end on a front face of the transparent body. This embodiment can be very readily attached and detached.

The invention will now be described more fully with reference to the drawing. In the drawing:

Figure 1 is a schematic representation of a first embodiment of an optical coupling device according to the invention,

Figure 2 is a longitudinal sectional view of a second embodiment, and

Figure 3 is a schematic representation of a third embodiment.

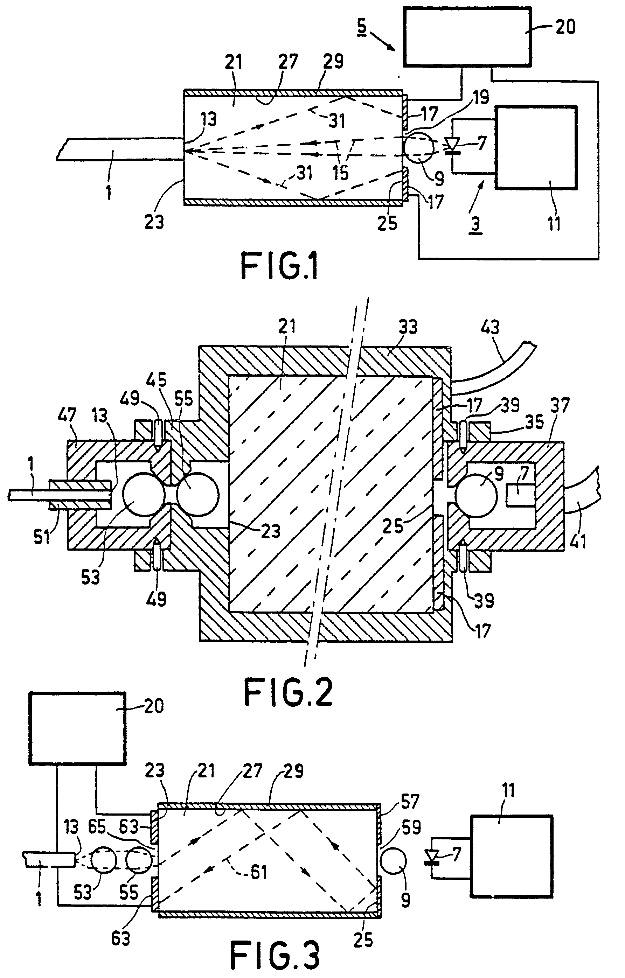

The optical coupling device shown diagrammatically in Figure 1 serves to couple an end 1 of a light-conducting fibre to both an optical transmitter device 3 and an optical receiver device 5. The transmitter device 3 comprises a transmitter element 7, for example in the form of a semiconductor laser, as well as a transmitter lens 9. The transmitter element 7 is controlled by a transmitter circuit 1 1 and then emits light which is focussed by the transmitter lens 9 onto an end face 13 of the fibre end 1. The light beam travelling from the transmitter element 7 to the end face 1 3 is indicated by dotted lines 15.

The receiver device 5 comprises a light-receiving element 17 arranged opposite the end face 13 of the fibre end 1, provided with an opening 19 and electrically connected to a receiver circuit 20. The front side of the light-receiving element 17 (in Figure 1 the lefthand side) faces the fibre end 1. The transmitter lens 9 and the transmitter element 7 are located on the rear side of the light-receiving element 17 opposite the opening 19. The light-receiving element 17 is constituted by a number of photosensitive elements, for example photosensitive diodes. If desired, it may also consist of a single photosensitive element with a central opening 19. In the example described here, the light-receiving element 17 extends in a plane at right angles to the longitudinal axis of the fibre end 1. However, it may also enclose an angle with this axis or may be curved so as to take the form of a cup with the concave side facing the fibre end 1.

Between the end face 13 of the fibre end 1 and the front side of the light-receiving element 17 there is arranged a transparent body 21 which is optically coupled on its front side (lefthand side in Figure 1) to the fibre end 1 by the end face 13 of the fibre end engaging the front surface 23 of the body, for example, with the addition of a suitable adhesive or a coupling liquid. On the rear side the transparent body 21 is optically coupled to the front side of the light-receivin element 17 and to the transmitter element 7. For this purpose, the photosensitive elements constituting the light-receiving element are secured against the rear surface 25 of the transparent body, for example, with a suitable cement. The transmitter element 7 is coupled through the transmitter lens 9 and the opening 19 to the transparent body 21. The side faces 27 of this body are made reflective, for example, by the application of a metal layer 29. The body 21 may consist, for example, of a rod of glass or synthetic resin in the form of a cylinder or a prism. Due to the fact that the side faces 27 are reflective, substantially all the light emanating from the fibre end 1 is conducted to the light-receiving element 17. By way of example, the paths of two light beams 31 are indicated in dotted lines. Since the light emanates at a limited angle to the axis of the fibre end 1, it cannot strike the parts of the side faces 27 located in the immediate proximity of the front surface 23. Thus, it is not absolutely necessary for the reflective layer 29 to extend as far as the front surface 23. The only light that is lost when striking the light-receiving element 17 is the light which is incident upon the opening 19 provided in the light-receiving element. When the surface area of this opening is made small with respect to the overall surface area of the light-receiving element, this loss can be reduced to a very small percentage.

Figure 2 is a longitudinal sectional view of a second embodiment, in which a larger number of constructional details are visible. The parts corresponding to parts of the embodiment shown in Figure 1 are denoted by the same reference numerals as in Figure 1. The transparent body 21 is secured in this embodiment in a metal housing 33, on the rear side of which (righthand side in Figure 2) a first annular plug holder 35 is formed. This plug holder constitutes together with a first plug part 37 a first detachable coupling. The first plug part 37 comprises radially projecting pins 39, which constitute together with L-shaped slots in the plug holder 35 a highspeed bayonette coupling. The first plug part 37 accommodates the transmitter element 7 and a first ball lens constituting the transmitter lens 9. The transmitter element is connected through a cable 41 to the transmitter circuit 11 ( see Figure 1). The parts 35,37 of the detachable coupling are manufactured according to the design of a known ball lens coupling. A large number of such couplings are known; see, for example, the Dutch Patent Application nos. 78 06 829 (PHN 9163) and 79 05 610 (PHN 9537). In order to avoid repetitions, the constructional details will not be described further herein. It should only be noted that, as far as the known couplings are adapted to couple light-conducting fibres, in the present case the transmitter element 7 takes the place of the end of the light-conducting fibre.

The light-collecting element 17 is situated between the rear wall of the housing 33 and the rear surface 25 of the transparent body 21. It is connected through a cable 43 to the receiver circuit 20 (see Figure 1).

On the front side of the housing 33 (the lefthand side in Fignre 2) there is formed a second annular plug holder 45, which constitutes together with a second plug part 47 a second detachable coupling. The second plug part 47 comprises radially projecting pins 49, which constitute together with L-shaped slots in the plug holder 45 a highspeed bayonette coupling. The second plug part 47 accommodates the fibre end 1 secured in the fibre holder 51. The second plug part 47 comprises a second ball lens 53 and completely corresponds to known plug parts. There is secured in the second plug holder 45 in the same manner as in the second plug part 47 a third ball lens 55, which constitutes together with the second ball lens 53 an optical imaging system, which images the end face 13 approximately to scale on the front surface 23 of the transparent body 21. Due to this construction, the connection between the fibre end 1 and the transparent body 21 can be rapidly and readily established and interrupted and a satisfactory optical coupling between the fibre end and the transparent body is guaranteed.

Figure 3 shows in the same manner as Figure 1 diagrammatically a third embodiment, in which corresponding parts are again denoted by the same reference numerals. In this example, the light-receiving element is constituted by the rear surface 25 of the transparent body 21. For this purpose, the rear surface s made reflective by the application of a reflecting metal layer 57, which can be provided simultaneously with the metal layer 29 on the side face 27. The reflecting layer 57 is provided with an opening 59 which has the same function as the opening 19 in the light-receiving element 17 shown in Figure 1.

A light beam 61 (indicated in dotted lines) emanating from the fibre end 1 through the ball lenses 53,55 (cf. Figure 2) reaches after one or more reflections on the side face 27 the rear surface 25 and, unless it strikes the opening 59, is then reflected back towards the front surface 23 at which it arrives after optionally having been reflected again a few times by the side face 27. One or more photosensitive elements 63 (for example, photosensitive diodes) are secured against the front surface 23, an opening 65 being provided for passing the light travelling from the fibre end to the transparent body 21. The light beam 61 strikes, unless it is incident upon the opening 65, the photosensitive element 63, which is electrically connected to the receiver circuit 20. When the openings 59 and 65 are sufficiently small with respect to the surfaces of the light-receiving element 57 and of the photosensitive element 63, the percentage of light that is lost through these openings is negligible.

The optical coupling device according to the invention, a few embodiments of which have been described above, may be used, for example, in a transmitter/receiver device for communication in two directions. Another possibility of its use is that energy is supplied through the light-conducting fibre in the form of light, which energy is converted in the receiver circuit into electrical energy for feeding the transmitter circuit, as a result of which the latter can operate independently of local energy sources.

## Claims

1. An optical coupling device for coupling an end (1) of a light-conducting fibre to an optical transmitter device (3) and an optical receiver device (5), the receiver device comprising a light-receiving element ( 17,57) arranged opposite an end face (13) of the fibre end and provided with an opening ( 19,59), a front side of said element

3

facing the fibre end, the transmitter device comprising a transmitter element (7) located on the rear side of the light-receiving element remote from the fibre end opposite the opening along whith as a transmitter lens (9) designed to focus the light emitted by the transmitter element towards the end face of the fibre end, characterized in that between the end face ( 13) of the fibre end ( 1) and the front side of the light-receiving element ( 17,57) there is arranged a transparent body (21) optically coupled to the fibre end, the light-receiving element and the transmitter element , (7) sai transparent body having side faces (27) and at least a part of each side face is reflecting, the arrangement being such that substantially all the light emanating from the fibre end strikes the light-receiving element.

2. An optical coupling device as claimed in Claim 1, characterized in that the transmitter element (7) is coupled to the transparent body (21) by means of a detachable coupling comprising a first plug part (37) with a first ball lens (9) serving as the transmitter lens, which first plug part can be detachably secured in a plug holder (35) rigidly connected to the transparent body.

3. An optical coupling device as claimed in Claim 1 or 2, characterized in that the end ( 1) of the lightconducting fibre is coupled to the transparent body (21) by means of a detachable coupling comprising a second plug part (47) with a second ball lens (53), which second plug part can be detachably secured in a plug holder (45) rigidly connected to the transparent body, which plug holder accommodates a third ball lens (55) which, when the second plug part is connected to the plug holder, constitutes together with the second ball lens an optical imaging system, which is designed to image the end face (13) of the fibre end approximately to scale on a front surface (23) of the transparent body.

4. An optical coupling device as claimed in anyone of Claims 1 to 3, characterized in that the light-receiving element (17) is constituted by at least a photosensitive element secured against a rear surface (25) of the transparent body (21).

5. An optical coupling element as claimed in anyone of Claims 1 to 3, characterized in that the light-receiving element (57) is constituted by at least a part of a rear surface (25) of the transparent body (21), which is reflective except at the area of the opening (59), whilst at least a photosensitive element (63) is secured against a front surface (23) of the transparent body.

**Patentansprüche**

1. Vorrichtung zum optischen Einkoppeln eines Endes (1) einer Lichtleitfaser in eine optische Sendevorrichtung (3) und eine optische Empfangsvorrichtung (5), wobei die Empfangsvorrichtung ein mit einer Öffnung (19,59) Versehenes Lichtempfangselement (17, 57) an der Stirnfläche (13) des Faserendes enthält, wobei eine Vorderseite des Elements dem Faserende zugewandt ist, wobei die Sendevorrichtung ein Senderelement (7) an der Rückseite des Lichtempfangselements im Abstand. Vom Faserende gegenüber der Offnung zusammen mit einer Senderlinse (9) enthält, die zum Fokussieren des vom Senderelement zur Endfläche des Faserendes ausgestrahlten Lichts aufgebaut ist, dadurch gekennzeichnet, dass zwischen der Stirnsfläche (13) des Faserendes (1) und der Frontseite des Lichtempfangselements (17, 57) ein transparenter Körper (21) in optischer Kopplung mit dem Faserende, dem Lichtempfangselement und dem Senderelement (7) angeordnet ist, wobei der transparente Körper Seitenfläche (27) aufweist und zumindest ein Teil jeder Seitenfläche reflektierend ist, wobei die Vorrichtung derart aufgebaut ist, dass im wesentlichen alles aus dem Faserende ankommende Licht auf das Lichtempfangselement fällt.

2. Vorrichtung zum optischen Einkoppeln nach Anspruch 1, dadurch gekennzeichnet, dass das Senderelement (7) mit dem transparenten Körper (21) über eine lösbare Verbindung mit einem ersten Steckerteil (37) mit einer ersten kugellinse (9) als Senderlinse gekoppelt ist, wobei der erste Steckerteil in eine fest mit dem transparenten Körper Verbundene Steckerhalterung (35) lösbar befestigt werden kann.

3. Vorrichtung zum optischen Einkoppeln nach Anspruch 1 oder 2, dadurch gekennzeichnet, dass das Ende ( 1) der Lichtleitfaser mit dem transparenter Körper (21) über eine lösbare Verbindung mit einem zweiten Steckerteil (47) mit einer zweiten Kuggellinse (53) gekoppelt ist, wobei der zweite Steckerteil in eine fest mit dem transparenten Körper Verbundene Steckerhalterung (45) lösbar befestigt werden kann, wobei die Steckerhalterung eine dritte Kuggellinse (55) enthält die, wenn der zweite Steckerteil mit der Steckerhalterung verbunden ist, zusammen mit der Zweiten Kuggellinse ein optisches Bildwiedergabesystem bildet, das zum Abbilden der Stirnfläche (13) des Faserendes auf einer Frontfläche (23) des transparenten Körpers etwa in wirklicher Grösse eingerichtet ist.

4. Vorrichtung zum optischen Einkoppeln nach einem oder mehreren der Ansprüche 1 bis 3, dadurch gekennzeichnet, dass das Lichtempfangselement ( 17) durch zumindest ein auf der Rückfläche (25) des transparenten Kürpers (21) angeordnetes fotoempfindliches Element gebildet wird.

5. Vorrichtung zum optischen Einkoppeln nach einem oder mehreren der Ansprüche 1 bis 3, dadurch gekennzeichnet, dass das Lichtempfangselement (57) durch zumindest einen Teil einer Rückfläche (25) des transparenten Körpers (21) gebildet wird, der mit Ausnahme des Bereiches der öffnung (59) reflektierend ist, während zumindest ein fotoempfindliches Element (63) auf einer Frontfläche (23) des transparenten Körpers befestigt ist.

**Revendications:**

1. Dispositif de couplage optique servant à couplér une extrémité (1) d'une fibre de guidage de lumière à un dispositif d'émmision optique (3) et à un dispositif de réception optique (5), le dispositif de réception comportant un élément récepteur de lumière (17, 57) disposé vis-à-vis d'une face terminale (13) de l'extrémité de la fibre et présentant une ouverture (19, 59), alors qu'une face avant dudit élément regarde l'extrémité de la fibre, le dispositif d'émission comportant un élément émetteur (7) disposé sur la face arrière de l'élément récepteur de lumière située à l'opposé de l'extrémité de fibre, vis-à-vis de l'ouverture, ainsi qu'une lentille emettrice (9) conçue pour focaliser la lumière émise par l'élément émetteur vers la face terminale de l'extrémité de fibre, caractérisé en ce qu'entre la face terminale (13) de l'extrémité de fibre (1) et la face avant de l'élément récepteur de lumière (17, 57), est disposé un corps transparent (21) couplé optiquement à l'extrémité de fibre, à l'élément récepteur de lumière et à l'élément émetteur (7), ledit corps transparent ayant des faces latérales (27) et au moins une partie de chaque face latérale étant réfléchissante, ensemble qui est agencé de façon que pratiquement toute la lumière sortant de l'extrémité de fibre frappe l'élément récepteur de lumière.

2. Dispositif de couplage optique selon la revendication 1, caractérisé en ce que l'élément émetteur (7) est couplé au corps transparent (21) au moyen d'un accouplément détachable comportant une première partie de fiche (37) munie d'une première lentille sphérique (9) servant de lentille émettrice, première partie de fiche qui peut être fixée de façon détachable dans un portefiche (35) solidaire du corps transparent.

3. Dispositif de couplage optique selon la revendication 1 ou 2, caractérisé en ce que l'extrémité (1) de la fibre de guidage de lumière est couplée au corps transparent (21) au moyen d'une accouplément détachable comportant une seconde partie de fiche (47) munie d'une deuxième lentille sphérique (53), seconde partie de fiche qui peut être fixée de façon détachable dans un portefiche (45) solidaire de corps transparent, portefiche dans lequel est montée une troisième lentille sphérique (55) qui, la seconde partie de fiche étant liée au portefiche, forme conjoinement avec la deuxième lentille sphérique un système de formation d'image conçu pour former l'image de la face terminale (13) de l'extrémité de fibre à peu près à l'échelle sur une surface avant (23) du corps transparent.

4. Dispositif de couplage optique selon l'une quelconque de revendications 1 à 3, caractérisé en ce que l'élément récepteur de lumière (17) est constitué par au moins un élément photosensible fixé contre une surface arrière 25 du corps transparent (21).

5. Dispositif de couplage optique selon l'une quelconque des revendications 1 à 3, caractérisé en ce que l'élément récepteur de lumière (57) est constitué par au moins une partie d'une surface arrière (25) du corps transparent (21) qui est réfléchissante sauf à l'endroit de l'ouverture (59), alors qu'au moins un élément photosensible (63) est fixé contre une surface avant (23) du corps transparent.

FIG.1

FIG.2

FIG.3